# EUROPÄISCHE PATENTSCHRIFT

(11) **EP 2 211 755 B1**
(45) Veröffentlichungstag und Bekanntmachung des Hinweises auf die Patenterteilung: **07.05.2014**
(21) Anmeldenummer: 08852535.7
(22) Anmeldetag: 21.11.2008
(51) Int. Cl.: A61C 9/00

(54) **MESSKÖRPER FÜR EIN IMPLANTAT UND VERFAHREN ZUR ERSTELLUNG EINER 3D-MESSAUFNAHME**
MEASURING BODY FOR AN IMPLANT AND METHOD FOR PROVIDING A 3D-MEASUREMENT DRAWING
CORPS DE MESURE POUR UN IMPLANT, ET PROCÉDÉ POUR RÉALISER UN ENREGISTREMENT DE MESURE EN 3D

(30) Priorität: 23.11.2007 DE 102007056820
(43) Veröffentlichungstag der Anmeldung: 04.08.2010
(73) Patentinhaber: Sirona Dental Systems GmbH, 64625 Bensheim (DE)
(72) Erfinder: SCHNEIDER, Sascha, 64367 Mühltal (DE); WEBER, Frank, 69502 Hemsbach (DE)
(74) Vertreter: Sommer, Peter
(86) Internationale Anmeldenummer: PCT/EP2008/066044
(87) Internationale Veröffentlichungsnummer: WO 2009/065954

(56) Entgegenhaltungen:
- US-A- 5 857 853
- US-B1- 6 558 162
- US-B1- 6 788 986

## Beschreibung

### technisches Gebiet

Die Erfindung betrifft einen Messkörper für ein Implantat, umfassend ein durch eine Messkamera erfassbare Messgeometrie und eine Anschlussgeometrie an das Implantat.

Die Erfindung betrifft ferner ein Ver-fahren zur Erstellung einer 3D-Messaufnahme eines an einem Implantat angeordneten Messkörpers, wobei das zu verwendende Implantat aus einer Anzahl verschiedener Implantattypen ausgewählt ist.

Bei der CAD/CAM unterstützten Versorgung von Kieferimplantaten wird in das frisch eingesetzte oder bereits eingeheilte Implantat ein temporärer Messkörper eingesteckt, der die Lage und Position des Implantates aus dem Kiefer- bzw. Gingivabereich nach oben hin verlängert. Auch bei in Gipsmodellen eingebrachten Implantatanalogen wird dieses Verfahren angewendet. In einem Oberflächenscan der Situation ist es mit Hilfe von speziellen Algorithmen möglich, die freiliegende Form des Messkörpers automatisch zu erkennen, seine Lage und Position zu berechnen. Da seine geometrische Form genau bekannt ist, kann daraus die im Kiefer, in der Gingiva oder im Modell versteckte Implantatlage und Position errechnet werden, die nicht direkt in einem Oberflächenscan der Situation sichtbar ist. Im Anschluss kann eine passende Zahnversorgung mittels CAD/CAM konstruiert werden.

Im Markt befindet sich eine Vielzahl unterschiedlichster Implantatformen, die sich unter anderem in Durchmesser und Anschlussgeometrie der aufgesetzten Zahnversorgung, etwa Abutments, wesentlich unterscheiden.

Bisher wurde für jede benötigte Implantatform ein komplett neuer, einteiliger Messkörper hergestellt. Manche Hersteller verwenden hierfür auch verlängerte Schrauben im Implantat. Zwar konnte bisher der obere Teil des Körpers größtenteils geometrisch gleich gehalten werden, musste jedoch auch zusammen mit dem fest angesetzten Unterteil des Messkörpers immer neu hergestellt werden, z.B. aus einer Spritzform. Jeder neue Messkörper benötigte einen neuen individuellen Fertigungsprozess. Hier mussten in aufwendigen Produktionsschritten einzelne Muster erstellt und auf Präzision hin vermessen werden, bis die benötigte Passung erreicht war. So besteht das Risiko, dass auch bei Beibehaltung der gleichen geometrischen Form des Oberteils, sich je nach verwendetem Werkzeug dennoch leichte und unbeabsichtigte Abmessungsunterschiede ergeben. Die Herstellung und Fertigung des Gesamtteils obliegt dem Entwickler der CAD/CAM Dental Software, die den Messkörper im Oberflächenscan findet und im Anschluss darauf eine Zahnrestauration erzeugt.

### Stand der Technik

Es sind Messkörper aus der DE 694 13 852 T2 bekannt. Die Messkörper sind einteilig ausgebildet und weisen einen Schaft auf, an dessen einen Ende die Messgeometrie angeordnet ist und an dessen anderem Ende ein Zapfen vorgesehen ist, über den der Messkörper in das Implantat einsteckbar ist.

Aus der EP 0 599 578 A2 sind ein Messkörper mit einer Messgeometrie und ein auf den Messkörper aufsetzbarer Hilfsmesskörper bekannt. Wenn eine Vermessung innerhalb des Mundes nicht möglich ist, wird der Hilfsmesskörper auf den Messkörper aufgesetzt, so dass der Hilfsmesskörper das Prüfteil bildet und von der anschließend eingebrachten Abdruckmasse aufgenommen werden kann. Der Hilfsmesskörper weist auf seiner aus der Abdruckmasse hervorstehenden Unterseite eine Messgeometrie auf, so dass die Position und Ausrichtung des Hilfsmesskörpers innerhalb des Abdrucks ermittelt werden kann. Eine Vermessung des am Implantat gelagerten Hilfskörpers ist nicht vorgesehen.

Ferner sind aus der DE 10 2004 035 091 A1 Vermessungsteile mit einer Messgeometrie bekannt, die eine Anschlussgeometrie für das Implantat aufweisen. Die Vermessungsteile werden über die Anschlussgeometrie an dem Implantat fixiert, so dass über die Messgeometrie auf die Ausrichtung der Implantatachse einerseits sowie auf die Lage der Anschlussgeometrie andererseits geschlossen werden kann.

Aus der US 5,857,853 ist ein Messkörper für ein Implantat bekannt, der eine Leiste mit optischen Makern und einen Anschlussstift umfasst, wobei der Anschlussstift am oberen Ende mit der Leiste verbindbar ist und am unteren Ende in ein Gewinde an einem Implantat einschraubbar ist.

Aus der US 6,788,986 B1 ist ein Messkörper mit Markern bekannt, der mittels einer Schraube an einem Implantat befestigbar ist.

Aus der US 6,558,162 B1 ist ein Heilabutment bekannt, welches mittels einer Schraube an einem Implantat befestigbar ist und am oberen Ende Marker aufweist.

Die Aufgabe der Erfindung besteht darin, einen Messkörper derart auszubilden und anzuordnen, dass ein reduzierter Herstellungsaufwand und eine eindeutige Bestimmung der Anschlußgeometrie gewährleistet ist.

### Darstellung der Erfindung

Der Messkörper gemäß der Erfindung ist wie in Anspruch 1 beansprucht.

Gemäß der Erfindung sind die Messgeometrie an einem Prüfteil und die Anschlussgeometrie an einem Trägerteil angeordnet und sowohl das Prüfteil als auch das Trägerteil sind als getrennte Bauteile ausgebildet, wobei das Trägerteil ein Lager für das Prüfteil und das Prüfteil ein Gegenlager zu dem Lager aufweisen und die Messgeometrie an einem freien Ende des am Trägerteil gelagerten Prüfteils vorgesehen ist. Das Lager und das Gegenlager weisen Orientierungsmittel auf, die in Umfangsrichtung zu einer Längsachse des Lagers und einer Längsachse des Gegenlagers eine eindeutige Orientierung zwischen dem Trägerteil und dem Prüfteil gewährleisten.

Die Messgeometrie ist im gelagerten Zustand des Prüfteils der Messkamera zugewandt. Hierdurch wird erreicht, dass das Prüfteil unabhängig von dem Trägerteil entwickelt und hergestellt werden kann. Bei sich ändernden Implantattypen ist es notwendig, auch das Trägerteil entsprechend neu zu konstruieren und herzustellen. Dies kann erfindungsgemäß unabhängig von der Konstruktion oder Herstellung des Prüfteils erfolgen. Bei der Konstruktion des Prüfteils kommt es im Wesentlichen auf die Messgeometrie und die hierzu entwickelte Auswertesoftware an, die trotz Anpassung des Messkörpers an neue Implantattypen durch Abänderung des Trägerteils unverändert beibehalten werden kann.

Der Entwicklungsaufwand der Software beim Hinzufügen neu zu unterstützender Implantatformen wird reduziert. Des Weiteren hat eine Veränderung des Prüfteils, z. B. zwecks Verbesserung der softwareseitigen Positionsfindung, keinen Einfluss auf das Trägerteil.

Die Bereitstellung eines separaten Prüfteils reduziert den Entwicklungsaufwand der Hardware bzw. des Gesamtmesskörpers. Da der Messkörper ein Präzisionsteil ist, das auf wenige µm genau angefertigt werden muss, ist der Entwicklungsaufwand für die Herstellung einer Form bzw. einer Maschine, die das Prüfteil des Messkörpers herstellt, nur einmal zu leisten. Es muss lediglich das Trägerteil für jede neu zu unterstützende Implantatform erneut entwickelt und angefertigt werden.

Ferner ist es möglich, die Produktion des Trägerteils durch die Weitergabe der geometrischen Passungsanforderungen des Prüfteils an andere Anschlussgeometrien abzugeben. So kann beispielsweise das Prüfteil bei dem Softwareentwickler hergestellt werden, der auch den zugehörigen Oberflächenscan-Erkennungslogarithmus entwickelt, während das Trägerteil beim Hersteller der jeweiligen Implantatform gefertigt wird. Ein weiterer Vorteil besteht darin, dass das Trägerteil des Messkörpers aus einem beliebigen, bei einem Einsatz in den Patientenmund beispielsweise lebensmittelechten Material sein kann, während das Prüfteil aus einem gut scanbaren Material gebildet ist. So ist es beispielsweise auch möglich, das Trägerteil unter Einsatz desinfizierbarer Materialien mehrmals zu verwenden.

Mit der Ausrichtung des Trägerteils nach der Anschlussgeometrie des Implantats ist es möglich, über vorgenannte Orientierungsmittel die Lage des Prüfteils relativ zum Trägerteil zumindest in Umfangsrichtung eindeutig zu übertragen.

Die Erfindung ermöglicht wie vorstehend erläutert die Vereinfachung und Trennung der Arbeitsabläufe, die beim Herstellen eines neuen Messkörpers für die Positions- und Lagebestimmung eines im Kieferknochen eingesetzten Implantats nötig sind. Der Entwicklungsaufwand wird sowohl softwaretechnisch als auch hardware-/werkzeugtechnisch reduziert.

Vorteilhaft kann es sein, wenn das Lager eine Längsachse und eine in Richtung der Längsachse wirkende erste Anschlagfläche und das Gegenlager eine Längsachse und eine in Richtung der Längsachse wirkende zweite Anschlagfläche aufweisen und die erste Anschlagfläche und die zweite Anschlagfläche in axialer Richtung der Längsachsen gegeneinander anlegbar sind. Die Anschlagflächen können vorzugsweise normal zur Längsachse ausgerichtet sein, so dass eine radiale Lagerung zwischen Lager und Gegenlager über die Anschlagflächen nicht erfolgt. Neben den Anschlagflächen können weitere parallel zur Längsachse angeordnete Führungsflächen vorgesehen sein, welche die radiale Führung zwischen Lager und Gegenlager gewährleisten.

Vorteilhaft kann auch sein, wenn das Trägerteil eine Anschlussgeometrie aufweist, die einer Anschlussgeometrie des Implantats entspricht. In der Regel kann es wünschenswert sein, den Messkörper mit der Anschlussgeometrie des Implantats zu verbinden, um neben der axialen Ausrichtung des Implantats auch die Winkellage der Anschlussgeometrie des Implantats zu erfassen.

Daneben kann es vorteilhaft sein, wenn die Orientierungsmittel als Anschlagmittel oder Anschlagflächen ausgebildet sind und bezüglich der Längsachsen eine Verdrehsicherung bilden und wenn das Orientierungsmittel des Lagers als Nut ausgebildet ist und das Orientierungsmittel des Gegenlagers als Vorsprung ausgebildet ist, wobei die Nut und der Vorsprung in Umfangsrichtung gegeneinander anlegbar sind und eine Verdrehsicherung bilden. Die Ausbildung der Anschlagmittel als Nut und Vorsprung bzw. Feder kann eine einfache Variante möglicher Anschlagmittel darstellen. Der Vorsprung bzw. die Feder muss dabei nicht über die gesamte Länge der Nut ausgebildet sein. Es kann ausreichend sein, den Vorsprung über einen Teil der Lagerlänge auszubilden, so dass die Verbindung zwischen Lager und Gegenlager bezüglich der interagierenden Flächen stufenweise erfolgt.

Ferner kann es von Vorteil sein, wenn das Lager und das Gegenlager ineinander einsteckbar sind und das Lager als Zylinder ausgebildet ist und das Gegenlager als Kolben ausgebildet ist. Der Kolben kann somit in einfacher Weise in den Zylinder eingeschoben werden. Hierdurch wäre zumindest eine radiale Führung zwischen Lager und Gegenlager gewährleistet. Die vorstehend genannten Orientierungsmittel bzw. die Nut und der Vorsprung können als Anschlagmittel für die Ausrichtung in Umfangsrichtung dienen. Die erste und die zweite Anschlagfläche können den verbleibenden letzten Freiheitsgrad in axialer Richtung definieren, so dass insgesamt ein fünfwertiges Lager zwischen dem Prüfteil und dem Trägerteil gewährleistet ist.

Vorteilhaft kann auch sein, wenn die Anschlussgeometrie des Messkörpers einen Zapfen aufweist, der in eine Ausnehmung des Implantats einsteckbar ist. Über den Zapfen kann die axiale Ausrichtung des Implantats auf das Trägerteil übertragbar sein. Der übrige Teil der Anschlussgeometrie kann vornehmlich der Übertragung von Positionsdaten des Implantats betreffend die axiale Höhe und die Winkellage bezüglich der Längsachse dienen.

Vorteilhaft kann auch sein, wenn das Prüfteil und das Trägerteil nach dem Fugen fest bzw. unlösbar miteinander verbunden sind. Das Trägerteil und das Prüfteil können dann unabhängig voneinander entwickelt und hergestellt werden, wobei letztendlich der Messkörper aus beiden Teilen zu einem einzigen Körper zusammengesetzt werden kann, z.B. mittels eines maschinellen Aufpress-, Aufsteck- oder Einspritzmechanismus.

Ein weiterer Gegenstand der Erfindung betrifft ein Verfahren zur Erstellung einer 3D-Messaufnahme eines an einem Implantat angeordneten Messkörpers wie in den Ansprüche 9 und 10 beansprucht. Für das erfindungsgemäβe Verfahren wird ein Messkörper, wie er vorstehend beschrieben ist, verwendet, wobei das zu verwendende Implantat aus einer Anzahl verschiedener Implantattypen ausgewählt ist. Auf das Implantat wird ein zum Implantattyp passendes Trägerteil aufgesetzt. Ferner wird ein standardisiertes, von dem Trägerteil baulich getrennt hergestelltes Prüfteil mit dem Trägerteil verbunden und in das Implantat eingebracht, wobei anschließend die Messgeometrie des Prüfteils im aufgesetzten Zustand mittels der Messkamera erfasst wird. Das Prüfteil wird relativ zum Trägerteil in Umfangsrichtung zu einer Längsachse des Lagers mittels der Orientierungsmittel ausgerichtet. Hierbei kann die Winkelstellung des Implantats, die über die Anschlussgeometrie auf das Trägerteil übertragen wurde, zudem von dem Trägerteil auf das Prüfteil übertragenen und somit über die Messkamera erfasst werden.

Gemäß einer alternativen Erfindung ist es möglich, zunächst das Prüfteil auf den zum Implantattyp passenden Trägerteil aufzusetzen und anschließend den so gebildeten Messkörper auf das Implantat aufzusetzen, um anschließend die Messgeometrie des Prüfteils im aufgesetzten Zustand mittels der Kamera zu erfassen. Das Prüfteil wird relativ zum Trägerteil in Umfangsrichtung zu einer Längsachse des Lagers mittels der Orientierungsmittel ausgerichtet.

Ferner kann es von Vorteil sein, wenn das Trägerteil relativ zum Implantat in Umfangsrichtung zu der Längsachse mittels der Anschlussgeometrie ausgerichtet wird.

Ebenso kann es von Vorteil sein, wenn die erste Anschlagfläche und die zweite Anschlagfläche in Richtung der Längsachse gegeneinander zur Anlage gebracht werden.

### Kurze Beschreibung der Zeichnungen

In den Zeichnungen sind Ausführungsbeispiele der Erfindung dargestellt. Es zeigt die:
- Fig. 1: einen Teilausschnitt eines Kiefermodells mit einer Restaurationsstelle sowie zwei Nachbarzähnen;
- Fig. 2: eine perspektivische Darstellung des Messkörpers;
- Fig. 3: eine perspektivische Darstellung des Messkörpers und des im Kiefer befindlichen Implantats;
- Fig. 4: ein alternatives Prüfteil.

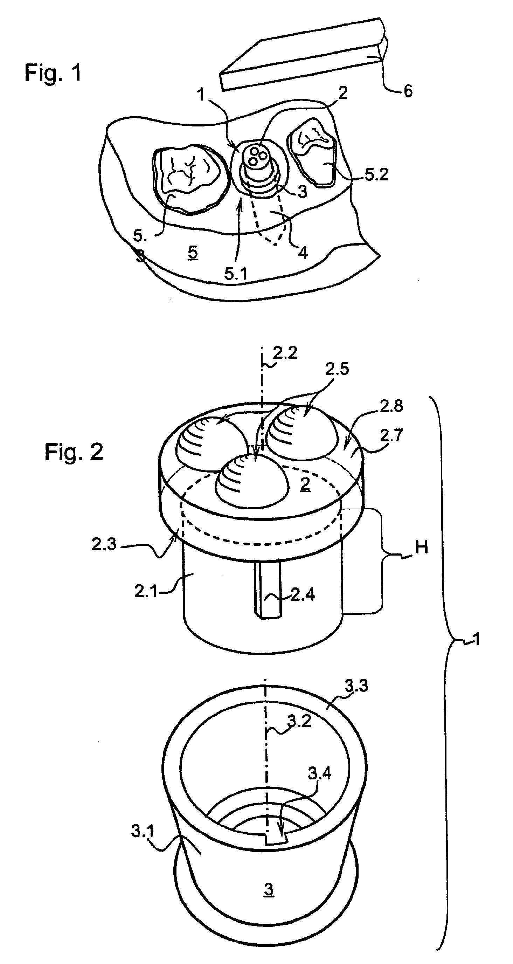

Ein Messkörper 1, bestehend aus einem Prüfteil 2 und einem Trägerteil 3, ist an einer Restaurationsstelle auf ein in ein Modell eines Kiefers 5 eingeschraubtes Implantat 4 aufgesetzt. Das Prüfteil 2 weist eine Messgeometrie 2.5 gemäß Fig. 2 auf, die von einer über das Modell gehaltenen Messkamera 6 erfasst wird.

Der in Fig. 2 dargestellte Messkörper 1 umfasst das Trägerteil 3, in welches das Prüfteil 2 einsetzbar ist. Das Trägerteil 3 weist ein Lager 3.1 auf, das als Zylinder ausgebildet ist. Das Prüfteil 2 weist ein als Kolben ausgebildetes Gegenlager 2.1 auf, welches in den Zylinder 3.1 einführbar ist. Sowohl der Kolben 2.1 als auch der Zylinder 3.1 weisen je eine Längsachse 2.2, 3.2 auf, die im eingeschobenen Zustand koaxial zueinander verlaufen. Das Prüfteil 2 weist auf seiner dem Lager 2.1 gegenüberliegenden Seite die Messgeometrie 2.5 auf, die aus drei auf einer Stirnseite 2.8 angeordneten halbkugelförmigen Teilgeometrien gebildet ist. Ein Kopf 2.7 des Prüfteils 2 ist im Durchmesser größer ausgebildet als der Kolben 2.1. Die Übergangsfläche zwischen dem Kopf 2.7 und dem Kolben 2.1 ist als zweite Anschlagfläche 2.3 ausgebildet, die im eingeschobenen Zustand gegen eine stirnseitige erste Anschlagfläche 3.3 des Zylinders 3.1 zur Anlage bringbar ist.

Sowohl der Kolben 2.1 als auch der Zylinder 3.1 weisen ein Orientierungsmittel 2.4, 3.4 auf. Das Orientierungsmittel 2.4 des Kolbens 2.1 ist als Vorsprung ausgebildet, während das Orientierungsmittel 3.4 des Zylinders 3.1 als Nut ausgebildet ist, so dass eine Nut-Feder-Verbindung entsteht. Der Vorsprung 2.4 ist lediglich über einen Teil einer Höhe H des Kolbens 2.1 ausgebildet, so dass der Kolben 2.1 zunächst in den Zylinder 3.1 einführbar ist und erst anschließend durch Ausrichten des Kolbens 2.1 und des Zylinders 3.1 in Umfangsrichtung zur Längsachse 2.2, 3.2 unter Anlage der Orientierungsmittel 2.4, 3.4 eingeschoben werden kann.

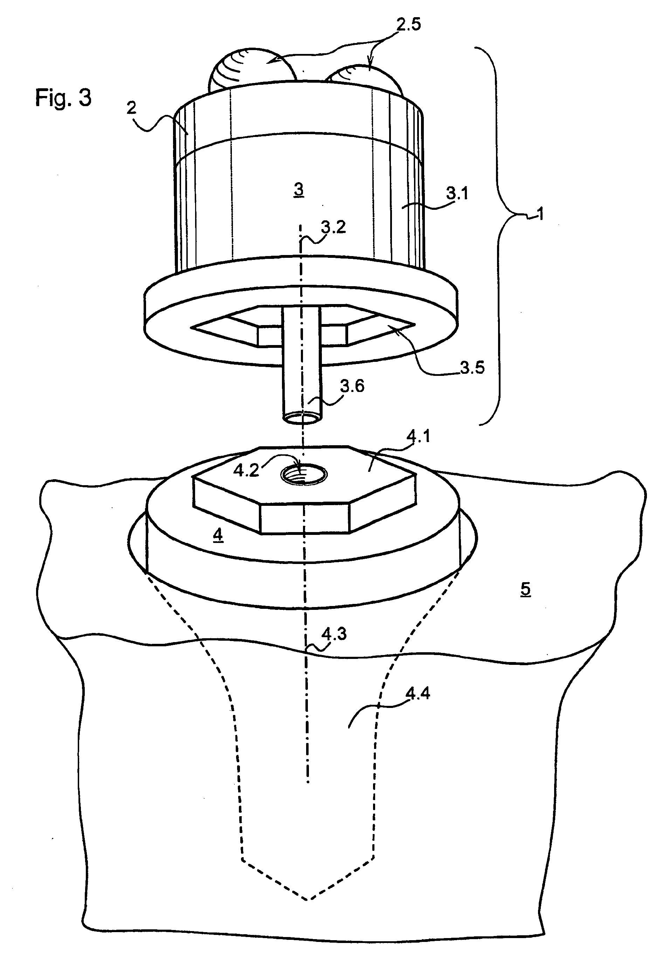

Das Trägerteil 3 weist gemäß Fig. 3 auf der dem Prüfteil 2 gegenüberliegenden Seite eine Anschlussgeometrie 3.5 auf, die einer Anschlussgeometrie 4.1 des Implantats 4 entspricht. Die Anschlussgeometrie 3.5, 4.1 ist hier sechskantförmig ausgebildet, wobei die Anschlussgeometrie 3.5, 4.1 trägerseitig als Vertiefung und implantatseitig als Erhöhung ausgebildet ist.

Die Anschlussgeometrie 3.5 weist zudem einen Zapfen 3.6 auf, der in eine Gewindebohrung 4.2 des Implantats 4 einschiebbar ist. Der Zapfen 3.6 ist koaxial zur Längsachse 3.2 angeordnet. Der Zapfen 3.6 ist im eingeschobenen Zustand innerhalb der Gewindebohrung 4.2 koaxial zur Gewindebohrung 4.2 und damit koaxial zu einer Längsachse 4.3 des Implantats 4 angeordnet. Die axiale Ausrichtung zwischen dem Messkörper 1 und dem Implantat 4 erfolgt vornehmlich über den Zapfen 3.6 und die Gewindebohrung 4.2, während die Ausrichtung in axialer Höhe, also den Abstand betreffend, sowie die Ausrichtung in Umfangsrichtung vornehmlich über die Anschlussgeometrie 3.5, 4.1 und die damit verbundenen Anschlagflächen erfolgt.

Das Implantat 4 ist in dem Modell des Kiefers 5 über eine Gewindebohrung 4.4 eingeschraubt.

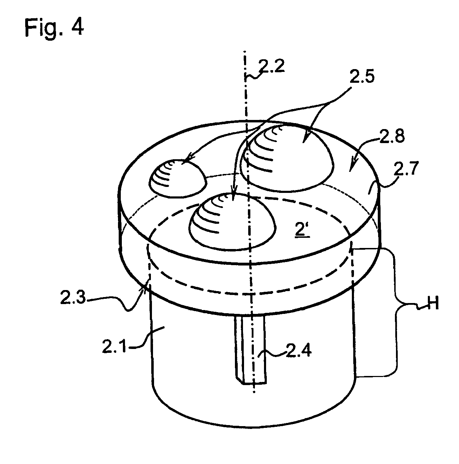

Das in Fig. 4 dargestellte Prüfteil 2' ist ebenso wie das Prüfteil 2 aus Fig. 2 auf das Trägerteil 3 gemäß Fig. 2 aufsetzbar. Es weist eine ähnliche Messgeometrie 2.5 auf, in der die drei halbkugelförmigen Teilgeometrien unterschiedlich groß ausgebildet sind, wobei die Unterschiede zu dem Prüfteil 2 jedoch hinreichend groß sind, um zu erkennen, welches der beiden Prüfteile 2, 2' gerade verwendet wird.

### Bezugszeichen

- 1: Messkörper
- 2: Prüfteil, Bauteil
- 2': Prüfteil, Bauteil
- 2.1: Gegenlager, Kolben
- 2.2: Längsachse
- 2.3: zweite Anschlagfläche
- 2.4: Orientierungs-, Anschlagmittel, Anschlagflächen, Feder, Vorsprung
- 2.5: Messgeometrie
- 2.6: freies Ende
- 2.7: Kopf
- 2.8: Stirnseite
- 3: Trägerteil, Bauteil
- 3.1: Lager, Zylinder
- 3.2: Längsachse
- 3.3: erste Anschlagfläche
- 3.4: Orientierungs-, Anschlagmittel, Anschlagflächen, Nut
- 3.5: Anschlussgeometrie
- 3.6: Zapfen
- 4: Implantat
- 4.1: Anschlussgeometrie
- 4.2: Gewindebohrung, Ausnehmung
- 4.3: Längsachse
- 4.4: Gewindebohrung
- 5: Kiefer
- 6: Messkamera

- H: Höhe

## Patentansprüche

1. Messkörper (1) für ein Implantat (4), umfassend eine durch eine Messkamera (6) erfassbare Messgeometrie (2.5) und umfassend eine Anschlussgeometrie (3.5) an das Implantat (4), wobei die Messgeometrie (2.5) an einem Prüfteil (2) und die Anschlussgeometrie (3.5) an einem Trägerteil (3) angeordnet ist, die beide als getrennte Bauteile (2, 3) ausgebildet sind, wobei das Trägerteil (3) ein Lager (3.1) für das Prüfteil (2) und das Prüfteil (2) ein Gegenlager (2.1) zu dem Lager (3.1) aufweisen und die Messgeometrie (2.5) an einem freien Ende (2.6) des Prüfteils (2) vorgesehen ist, **dadurch gekennzeichnet, dass** das Lager (3.1) und das Gegenlager (2.1) Orientierungsmittel (3.4, 2.4) aufweisen, die in Umfangsrichtung zu einer Längsachse (3.2) des Lagers (3.1) und einer Längsachse (2.2) des Gegenlagers (2.1) eine eindeutige Orientierung zwischen dem Trägerteil (3) und dem Prüfteil (2) gewährleisten.

2. Messkörper (1) nach Anspruch 1, **dadurch gekennzeichnet, dass** das Lager (3.1) eine in Richtung der Längsachse (3.2) des Lagers (3.1) wirkende erste Anschlagfläche (3.3) und das Gegenlager (2.1) eine in Richtung der Längsachse (2.2) des Gegenlagers (2.1) wirkende zweite Anschlagfläche (2.3) aufweisen, wobei die erste Anschlagfläche (3.3) und die zweite Anschlagfläche (2.3) in axialer Richtung der Längsachsen (3.2, 2.2) gegeneinander anlegbar sind.

3. Messkörper (1) nach einem der Ansprüche 1 oder 2, **dadurch gekennzeichnet, dass** die Orientierungsmittel (3.4, 2.4) als Anschlagmittel oder Anschlagflächen ausgebildet sind und bezüglich der Längsachsen (3.2, 2.2) eine Verdrehsicherung bilden.

4. Messkörper (1) nach einem der Ansprüche 1 bis 3, **dadurch gekennzeichnet, dass** das Orientierungsmittel (3.4) des Lagers (3.1) als Nut ausgebildet ist, und dass das Orientierungsmittel (2.4) des Gegenlagers (2.1) als Vorsprung ausgebildet ist, wobei die Nut (3.4) und der Vorsprung (2.4) in Umfangsrichtung gegeneinander anlegbar sind und eine Verdrehsicherung bilden.

5. Messkörper (1) nach einem der Ansprüche 1 bis 4, **dadurch gekennzeichnet, dass** das Lager (3.1) und das Gegenlager (2.1) ineinander einsteckbar sind.

6. Messkörper (1) nach einem der Ansprüche 1 bis 5, **dadurch gekennzeichnet, dass** das Lager (3.1) als Zylinder ausgebildet ist und das Gegenlager (2.1) als Kolben ausgebildet ist.

7. Messkörper (1) nach einem der Ansprüche 1 bis 6, **dadurch gekennzeichnet, dass** die Anschlussgeometrie (3.5) einen Zapfen (3.6) aufweist.

8. Messkörper (1) für ein Implantat (4), gebildet aus einem Prüfteil (2) und einem Trägerteil (3), nach einem der vorhergehenden Ansprüche, **dadurch gekennzeichnet, dass** das Prüfteil (2) und das Trägerteil (3) fest verbunden sind.

9. Verfahren zur Erstellung einer 3D-Messaufnahme eines an einem Implantat (4) angeordneten Messkörpers (1) nach einem der vorhergehenden Ansprüche, wobei das zu verwendende Implantat (4) aus einer Anzahl verschiedener Implantattypen ausgewählt ist, wobei
- ein zum Implantattyp (4) passendes Trägerteil (3) auf das Implantat (4) aufgesetzt wird,
- ein standardisiertes, von dem Trägerteil (3) baulich getrenntes Prüfteil (2) auf das Trägerteil (3) aufgesetzt wird,
- die Messgeometrie (2.5) des Prüfteils (2) im aufgesetzten Zustand mittels der Messkamera (6) erfasst wird,
**dadurch gekennzeichnet, dass** das Prüfteil (2) relativ zum Trägerteil (3) in Umfangsrichtung zu einer Längsachse (3.2) des Lagers (3.1) mittels der Orientierungsmittel (3.4, 2.4) ausgerichtet wird.

10. Verfahren zur Erstellung einer 3D-Messaufnahme eines an einem Implantat (4) angeordneten Messkörpers (1) nach einem der vorhergehenden Ansprüche, wobei das zu verwendende Implantat (4) aus einer Anzahl verschiedener Implantattypen identifiziert ist, wobei
- ein standardisiertes, von dem Trägerteil (3) baulich getrennt gefertigtes Prüfteil (2) mit einem zum Implantattyp (4) passenden Trägerteil (3) verbunden wird,
- der Messkörpers (1) mittels des Trägerteils (3) auf das Implantat (4) aufgesetzt wird,
- die Messgeometrie (2.5) des Prüfteils (2) im aufgesetzten Zustand mittels der Messkamera (6) erfasst wird,
**dadurch gekennzeichnet, dass** das Prüfteil (2) relativ zum Trägerteil (3) in Umfangsrichtung zu einer Längsachse (3.2) des Lagers (3.1) mittels der Orientierungsmittel (3.4, 2.4) ausgerichtet wird.

11. Verfahren nach einem der Ansprüche 9 oder 10, **dadurch gekennzeichnet, dass** das Trägerteil (3) in Umfangsrichtung zu der Längsachse (3.2) mittels der Anschlussgeometrien (3.5) ausgerichtet wird.

12. Verfahren nach einem der Ansprüche 9 bis 11, **dadurch gekennzeichnet, dass** die erste Anschlagfläche (3.3) und die zweite Anschlagfläche (2.3) in Richtung der Längsachse (3.2, 2.2) gegeneinander zur Anlage gebracht werden.

## Claims

1. A measuring body (1) for an implant (4), comprising a measurement geometry (2.5) detectable by a measurement camera (6), and comprising a connection geometry (3.5) to the implant (4), wherein the measurement geometry (2.5) is disposed on a test part (2) and the connection geometry (3.5) is disposed on a carrier part (3), both of which are designed as separate parts (2, 3), wherein the carrier part (3) has a bearing (3.1) for the test part (2) and 10 the test part (2) has a counter-bearing (2.1) to the bearing (3.1), and the measurement geometry (2.5) is provided on a free end (2.6) of the test part (2), **characterized in that** the bearing (3.1) and the counter-bearing (2.1) have orientation means (3.4, 2.4), which ensure an unambiguous orientation between the carrier part (3) and the test part (2) in the circumferential direction relative to a longitudinal axis (3.2) of the bearing (3.1) and a longitudinal axis (2.2) of the counter-bearing (2.1).

2. The measuring body (1) in accordance with Claim 1, **characterized in that** the bearing (3.1) has a first stop surface (3.3) which acts in the direction of the longitudinal axis (3.2) of the bearing (3.1), and the counter-bearing (2.1) has a second stop surface (2.3) which acts in the direction of the longitudinal axis (2.2) of the counter-bearing (2.1), wherein the first stop surface (3.3) and the second stop surface (2.3) can be applied against one another in the axial direction of the longitudinal axes (3.2, 2.2).

3. The measuring body (1) in accordance with one of Claims 1 or 2, **characterized in that** the orientation means (3.4, 2.4) are designed as stop means or as stop surfaces and form an anti-twist protection with respect to the longitudinal axes (3.2, 2.2).

4. The measuring body (1) in accordance with one of Claims 1 to 3, **characterized in that** the orientation means (3.4) of the bearing (3.1) is designed as a groove, and the orientation means (2.4) of the counter-bearing (2.1) are designed as a protrusion, such that the groove (3.4) and the protrusion (2.4) can be applied on each another in the circumferential direction and form an anti-twist protection.

5. The measuring body (1) in accordance with one of Claims 1 to 4, **characterized in that** the bearing (3.1) and the counter-bearing (2.1) can be inserted one into the other.

6. The measuring body (1) in accordance with one of Claims 1 to 5, **characterized in that** the bearing (3.1) is designed as a cylinder, and the counter-bearing (2.1) is designed as a piston.

7. The measuring body (1) in accordance with one of Claims 1 to 6, **characterized in that** the connection geometry (3.5) has a pin (3.6).

8. The measuring body (1) for an implant (4), formed from a test part (2) and a carrier part (3), in accordance with one of the preceding Claims, **characterized in that** the test part (2) and the carrier part (3) are fixedly connected.

9. A method for creating a 3D measurement image of a measuring body (1) disposed on an implant (4) in accordance with one of the preceding claims, wherein the implant (4) to be used is selected from a number of different types of implants, wherein
- a carrier part (3) that fits the type of implant (4) is placed on the implant (4),
- a standardized test part (2) which is structurally separated from the carrier part (3) is mounted on the carrier part (3),
- the measurement geometry (2.5) of the test part (2), when mounted, is detected by means of the measurement camera (6),
**characterized in that** the test part (2) is oriented relative to the carrier part (3) in the circumferential direction to a longitudinal axis (3.2) of the bearing (3.1) by means of the orientation means (3.4, 2.4).

10. The method for creating a 3D-measurement image of a measuring body (1) disposed on an implant (4) in accordance with one of the preceding Claims, wherein the implant (4) to be used is identified from a number of different types of implants, wherein
- a standardized test part (2) which is produced structurally separate from the carrier part (3) is connected to a carrier part (3) fitting for a type of implant (4),
- the measuring body (1) is mounted on the implant (4) by means of the carrier part (3),
- the measurement geometry (2.5) of the test part (2) is detected in the mounted state by means of the measurement camera (6),
**characterized in that** the test part (2) is oriented relative to the carrier part (3) in the circumferential direction to a longitudinal axis (3.2) of the bearing (3.1) by means of the orientation means (3.4, 2.4).

11. The method in accordance with one of Claims 9 or 10, **characterized in that** the carrier part (3) is oriented in the circumferential direction to the longitudinal axis (3.2) by means of the connection geometries (3.5).

12. The method in accordance with one of Claims 9 to 11, **characterized in that** the first stop surface (3.3) and the second stop surface (2.3) are brought into contact with one another in the direction of the longitudinal axis (3.2, 2.2).

## Revendications

1. Corps de mesure (1) pour un implant (4), comprenant une géométrie de mesure (2.5) pouvant être détectée par une caméra de mesure (6) et comprenant une géométrie de raccord (3.5) avec l'implant (4), dans lequel la géométrie de mesure (2.5) est agencée sur une pièce d'inspection (2) et la géométrie de raccord (3.5) est disposée sur une pièce porteuse (3), les deux étant formées comme des composants (2, 3) séparés, dans lequel la pièce porteuse (3) présente un palier (3.1) pour la pièce d'inspection (2) et 10 la pièce d'inspection (2) présente un contre-palier (2.1) pour le palier (3.1) et la géométrie de mesure (2.5) est prévue au niveau d'une extrémité libre (2.6) de la pièce d'inspection (2), **caractérisé en ce que** le palier (3.1) et le contre-palier (2.1) présentent chacun un moyen d'orientation (3.4, 2.4), qui assurent une orientation précise dans la direction de la circonférence par rapport à un axe longitudinal (3.2) du palier (3.1) et un axe longitudinal (2.2) du contre-palier (2.1) entre la pièce porteuse (3) et la pièce d'inspection (2).

2. Corps de mesure (1) selon la revendication 1, **caractérisé en ce que** le palier (3.1) présente une première surface de butée (3.3) agissant dans une direction de l'axe longitudinal (3.2) du palier (3.1) et **en ce que** le contre-palier (2.1) présente une seconde surface de butée (2.3) agissant dans une direction de l'axe longitudinal (2.2) du contre-palier (2.1), dans lequel la première surface de butée (3.3) et la seconde surface de butée (2.3) peuvent être déplacées dans une direction axiale des axes longitudinaux (3.2, 2.2) pour venir en butée l'une contre l'autre.

3. Corps de mesure (1) selon une des revendications 1 ou 2, **caractérisé en ce que** les moyens d'orientation (3.4, 2.4) sont formés comme des moyens de butée ou des surfaces de butée et forment, par rapport aux axes longitudinaux (3.2, 2.2) un blocage anti-rotation.

4. Corps de mesure (1) selon l'une des revendications 1 à 3, **caractérisé en ce que** le moyen d'orientation (3.4) du palier (3.1) est formé comme une rainure et **en ce que** le moyen d'orientation (2.4), du contre-palier (2.1) est formé comme une saillie, dans lequel la rainure (3.4) et la saillie (2.4) peuvent être déplacées l'une contre l'autre dans la direction de la circonférence et forment un blocage anti-rotation.

5. Corps de mesure (1) selon une des revendications 1 à 4, **caractérisé en ce que** le palier (3.1) et le contre-palier (2.1) peuvent être encliquetés l'un dans l'autre.

6. Corps de mesure (1) selon une des revendications 1 à 5, **caractérisé en ce que** le palier (3.1) est formé comme un cylindre et **en ce que** le contre-palier (2.1) est formé comme un piston.

7. Corps de mesure (1) selon une des revendications 1 à 6, **caractérisé en ce que** la géométrie de raccord (3.5) présente un tenon (3.6).

8. Corps de mesure (1) pour un implant (4), composé d'une pièce d'inspection (2) et d'une pièce porteuse (3), selon l'une des revendications précédentes, **caractérisé en ce que** la pièce d'inspection (2) et la pièce porteuse (3) sont reliées de manière fixe.

9. Procédé de production d'une image de mesure en 3D d'un corps de mesure (1) agencé sur un implant (4), selon l'une des revendications précédentes, dans lequel l'implant (4) à utiliser est choisi parmi un certain nombre de types différents d'implants, le procédé comprenant
- le montage d'une pièce porteuse (3) adaptée au type d'implant (4) sur l'implant (4),
- le montage d'une pièce d'inspection (2) normalisée, construite séparément de la pièce porteuse (3) sur la pièce porteuse (3),
- la détermination de la géométrie de mesure (2.5) de la pièce d'inspection (2), dans l'état monté, par le biais d'une caméra de mesure (6),
**caractérisé en ce que** la pièce d'inspection (2) est orientée par rapport à la pièce porteuse (3), dans la direction de la circonférence, par rapport à un axe longitudinal (3.2) de palier (3.1) par le biais des moyens d'orientation (3.4, 2.4).

10. Procédé de production d'une image de mesure en 3D d'un corps de mesure (1) agencé sur un implant (4) selon une des revendications précédentes, dans lequel l'implant (4) à utiliser est identifié parmi une sélection de différents types d'implants, le procédé comprenant
- le raccord d'une pièce d'inspection (2) normalisée, construite séparément de la pièce porteuse (3) avec une pièce porteuse (3) adaptée à un type d'implant (4),
- le montage du corps de mesure (1) par le biais de la pièce porteuse (3) sur l'implant (4),
- la détermination de la géométrie de mesure (2.5) de la pièce d'inspection (2), dans l'état monté, par le biais d'une caméra de mesure (6),
**caractérisé en ce que** la pièce d'inspection (2) est orientée par rapport à la pièce porteuse (3), dans la direction de la circonférence, par rapport à un axe longitudinal (3.2) du palier (3.1) par le biais des moyens d'orientation (3.4, 2.4).

11. Procédé selon la revendication 9 ou 10, **caractérisé en ce que** la pièce porteuse (3) est orientée dans la direction de la circonférence par rapport à l'axe longitudinal (3.2) par le biais de la géométrie de raccord (3.5).

12. Procédé selon l'une des revendications 9 à 11, **caractérisé en ce que** la première surface de butée (3.3) et la seconde surface de butée (2.3) peuvent être mises en appui l'une contre l'autre dans la direction de l'axe longitudinal (3.2, 2.2).
